# EUROPEAN PATENT APPLICATION

(11) **EP 1 418 712 A1**
(43) Date of publication of application: **12.05.2004**
(21) Application number: 03257027.7
(22) Date of filing: 06.11.2003
(51) Int. Cl.: H04L 12/28, H04Q 7/34

(54) **Method of managing network operation information in mobile communication system**

(30) Priority: 06.11.2002 KR 2002068573
(71) Applicant: SAMSUNG ELECTRONICS CO., LTD., Suwon city, Kyongki-do (KR)
(72) Inventor: Park, Won-hyoung, Gwanak-gu Seoul (KR); Cho, Sung-hyun, Songpa-gu Seoul (KR); Kim, Young-soo, Gangnam-gu Seoul (KR); Hwang, Chan-soo, Kiheung-eub Yongin-city (KR)
(74) Representative: Greene, Simon Kenneth

(57) **Abstract**

A method of managing network operation information in a mobile communication system is disclosed. The method of managing various kinds of network operation information in a mobile communication system comprising a plurality of nodes connecting wire networks and wireless networks, comprises: establishing a database comprising information management tables comprising the network operation information; defining a message format to transmit the network operation information among the nodes; collecting the network operation information for cell areas managed by the nodes, according to a set period; packeting the collected network operation information in the message format using a predetermined general-purpose protocol; transmitting the packeted message to neighboring nodes; and analyzing the transmitted message to update the network operation information in the information management tables of the nodes in the database.

## Description

The present invention relates to a mobile communication system, and more particularly, to a method of transmitting, sharing, and managing network operation information in a decentralized processing way.

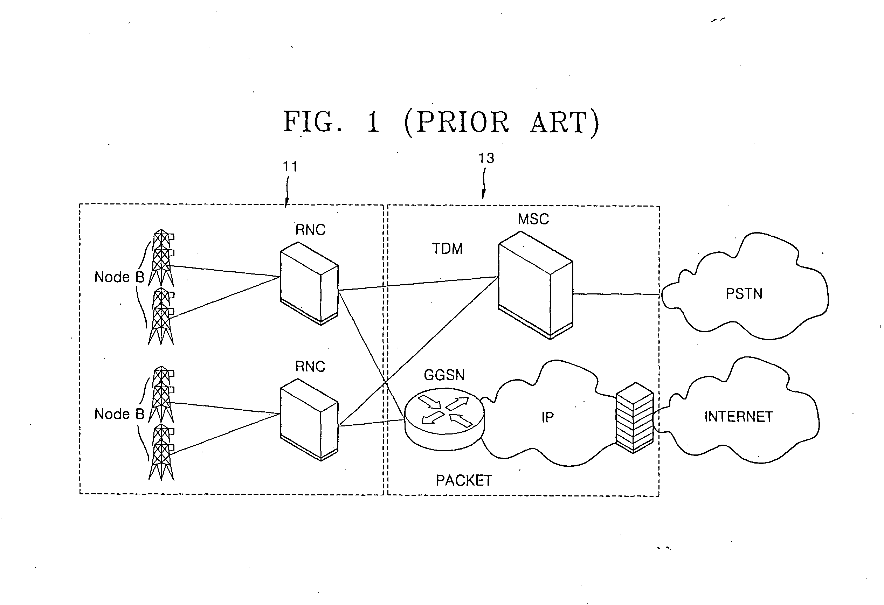

FIG. 1 shows a network structure of a mobile communication system suggested by Third Generation Partnership Project (3GPP). The mobile. communication system includes a radio access network (RAN) 11 with a hierarchical structure and a core network (CN) 13. Each of the RAN 11 and the CN 13 includes network components to offer mobile communication services. The RAN 11 processes radio connection and mobility of mobile terminals, and the CN 13 processes connections to a public switched telephone network (PSTN) or the Internet network. The RAN 11 includes radio network controllers (RNCs) to perform a handover control function, an admission control function, etc., and base stations, i.e., nodes B, which radio-communicate with the mobile terminals. The CN 13 has a voice communication with the PSTN via a mobile service switching center (MSC), and a packet communication with the Internet network via a Servicing GPRS Support Node (SGSN)/Gateway GPRS Support Node (GGSN). In other words, in the conventional network structure, the RAN 11 is connected to the mobile terminals via the base stations and the CN 13 is connected to the Internet network or the PSTN.

In the above-described conventional network structure, the RNCs, the SGSN/GGSN, and the MSC transmit and manage various kinds of network operation information in a centralized processing approach. Such a centralized processing approach is easily managed in closed private networks. However, since the centralized processing approach requires a complicated network structure, the centralized processing approach takes a large amount of cost and extends in the limited range. In addition, since the centralized processing approach is not compatible with other kinds of networks, so the centralized processing approach is not convenient for roaming.

In a next generation mobile communication system, a complicated network structure including an RAN, a CN, a PSTN, and the Internet network tends to be simplified. An ALL-IP architecture based on an Internet Protocol (IP) packet network has been introduced to unite all networks into one. It is quite ineffective to manage network operation information in the centralized processing approach in the simplified network structure or the ALL-IP based network structure.

According to an aspect of the present invention, there is provided a method of managing various kinds of network operation information in a mobile communication system comprising a plurality of nodes connecting wire networks and wireless networks, the method comprising: establishing a database comprising information management tables comprising the network operation information; defining a message format to transmit the network operation information among the nodes; collecting the network operation information for cell areas managed by the nodes, according to a set period; packeting the collected network operation information in the message format using a predetermined general-purpose protocol; transmitting the packeted message to neighboring nodes; and analyzing the transmitted message to update the network operation information in the information management tables of the nodes in the database.

The present invention provides a method of transmitting, sharing, and managing network operation information in a decentralized processing way using a general-purpose protocol stack regardless of a network structure of a mobile communication system.

The above and other features and advantages of the present invention will become more apparent by describing in detail exemplary embodiments thereof with reference to the attached drawings in which:
FIG. 1 is a view showing a conventional 3GPP network structure;
FIG. 2 is a view showing a network structure for a next generation mobile communication system adopting a method of managing network operation information, according to an embodiment of the present invention;
FIG. 3 is a flowchart for explaining a method of managing network operation information, according to an embodiment of the present invention;
FIG. 4 is a view showing an information management table stored in a database (DB), according to an embodiment of the present invention; and
FIG. 5 is a view showing a type length value (TLV) format, according to an embodiment of the present invention.

Hereinafter, preferred embodiments of the present invention will be described in detail with reference to the attached drawings.

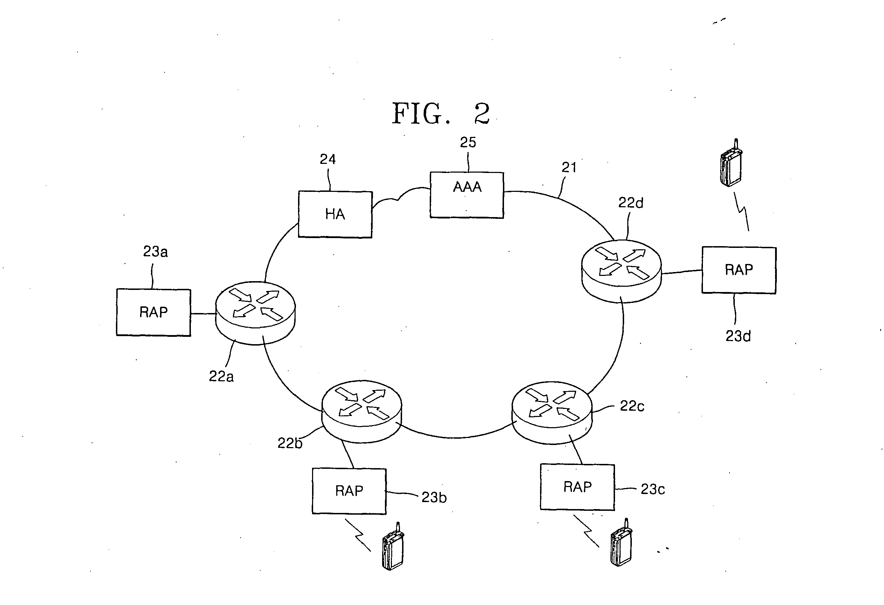

FIG. 2 is a view showing an example of a network structure for a mobile communication system adopting a method of managing network operation information, according to an embodiment of the present invention. Referring to FIG. 2, a public Internet network 21 includes a plurality of IP routers 22a through 22d, a home,agent 24, and an authorization authentication accounting (AAA) server 25. A plurality of nodes, that is, radio access points 23a through 23d are connected to the IP routers 22a through 22d, respectively.

Before we move on to the explanation of each element of the network architecture of FIG. 2, let us assume that data is transmitted over the public Internet network 21 according to such Internet protocol as Internet Protocol version 6 (IPv6) specified by the Internet Engineering Task Force (IETF)'s Request for Comments (RFC) 2460.

The IP routers 22a through 22d serve as gateways for transmitting data between a sending node and a destination node by using typical Internet addresses and routing protocols.

The nodes, that is, RAPs 23a through 23d can be accessed by mobile terminals in a wireless manner. In addition, the RAPs 23a through 23d are connected to the IP routers 22a through 22d in a wired manner, connect mobile terminals with the public Internet network 21 and perform router functions as well as general radio link functions. The RAPs 23a through 23d sets a signalling path to the RAPs 23a through 23d, the home agent 24 and the AAA server 25 through a typical virtual private network (VPN) service. Accordingly, in a case that any of the mobile terminals requests mobile communication service, each of RAPs 23a through 23d in the vicinity of which the mobile terminal is located can communicate with adjacent RAPs 23a through 23d, the home agent 24 and the AAA server 25 along a VPN signalling path while guaranteeing security.

Each of the RAPs 23a through 23d serves as a radio network controller (RNC), a gateway general-packet-radio-service (GPRS) support node (GGSN), and a mobile service switching center (MSC) in the network architecture of FIG. 1, which is proposed by the third-generation partnership project (3GPP). Accordingly, the RAPs 23a through 23d may use session initiation protocol (SIP) for call setting, telephony routing over IP (TRIP) for telephone services, E.164 telephone numbers, and protocols defined by the IETF's Telephone Number Mapping (ENUM) working group for corresponding to Domain Name System (DNS). In the meantime, the RAPs 23a through 23d are required to reserve resources on a network for guaranteeing different qualities of service depending on the types of communications, such as voice communications, video phone services, or data communications. The reservation of resources is carried out by using either resource reservation protocol (RSVP) or Differentiated Services (DiffServ) or by using both. Here, RSVP is a protocol that enables resources to be reserved along a predetermined path, and DiffServ is an architecture that transmits data according to their priority. If a mobile terminal moves from the vicinity of an RAP to the vicinity of another RAP, a micromobility protocol operates and quickly carries out a handover and also resource reservation changes only in areas which have undergone a change in the setup of the path. Thereafter, a binding update message, generated by the RAP (23a through 23d) in the vicinity of which the mobile terminal is located, is transmitted to the home agent 24 via a corresponding IP router (22a through 22d).

The home agent 24 controls all the RAPs 23a through 23d in the public Internet network 21, which is a wired network, and performs a variety of functions, such as initial registration of mobile terminals, IP routing and root optimization, management of the address and migration information of the mobile terminal, tunnelling, and inverse tunnelling. Preferably, the home agent 24 is constructed to support virtual private network services of the mobile terminal. In order to manage and support migration of the mobile terminal, in particular, the home agent 24 receives location information of the mobile terminal contained in the binding update message delivered from the RAPs 23a through 23d when the mobile terminal leaves its home network and then attempts to access a network outside the home network. Thereafter, the home agent 24 stores the received location information of the mobile terminal in a database. The home agent 24 stores a home IP address of each of the RAPs 23a through 23d as location information of the mobile terminal in the form of a table and, if necessary, transmits data received from the mobile terminal to the RAP 23a through 23d through tunnelling and encapsulation. In other words, if a mobile terminal sends data to its home network with only knowledge of a home IP address of the destination mobile terminal, the home agent 24 analyzes the data, extracts location information of the destination mobile terminal from the database based on a result of the analysis, and transmits the data to a network where the destination mobile terminal belongs using the RAPs 23a through 23d. The home agent 24 may use IETF's mobility IP protocol as a macromobility protocol and Cellular IP or HAWAII as a micromobility protocol. In addition, the home agent 24 may use a content transfer protocol for transmitting current connection information and a handoff candidate discovery protocol for a handover.

The AAA server 25 serves as a subscriber server from a mobile IP's point of view and performs authorization of subscribers who attempt to access the public Internet network 21 for mobile terminals, authentication of the subscribers' rights to use the public Internet network 21, and charging the subscribers for access to the public Internet network 21. The AAA server 25 stores AAA information of each mobile terminal. For these functions, the AAA server 25 may use a protocol, such as Remote Authentication Dial in User Service (RADIUS), Diameter, or Common Open Policy Service (COPS). Like the home agent 24, the AAA server 25 is preferably constructed to support VPN services of mobile terminals.

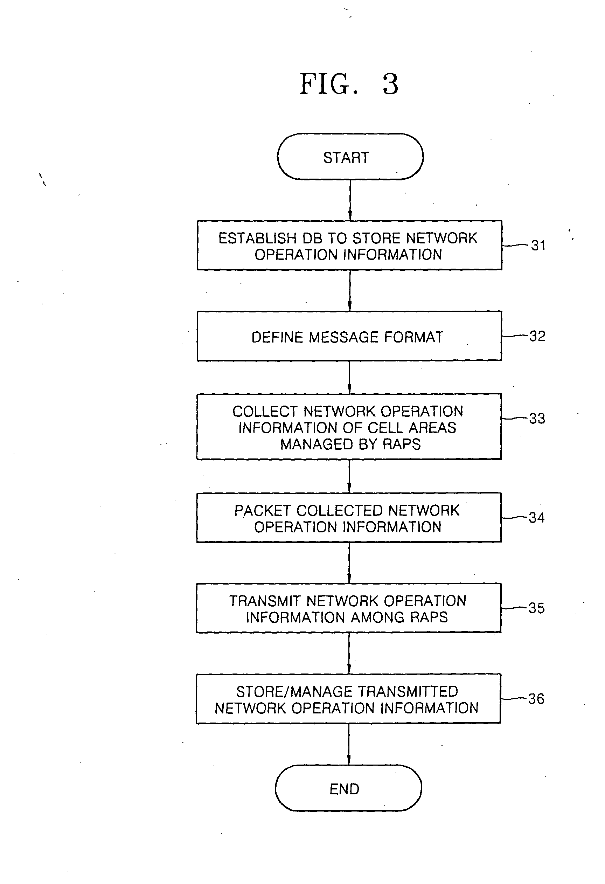

FIG. 3 is a flowchart for explaining a method of managing network operation information, according to an embodiment of the present invention. This method is applicable to all kinds of network structures including nodes offering communications with wire or wireless networks such as the Internet network, for example, the RAPs 23a through 23d as well as a network structure shown in FIG. 2.

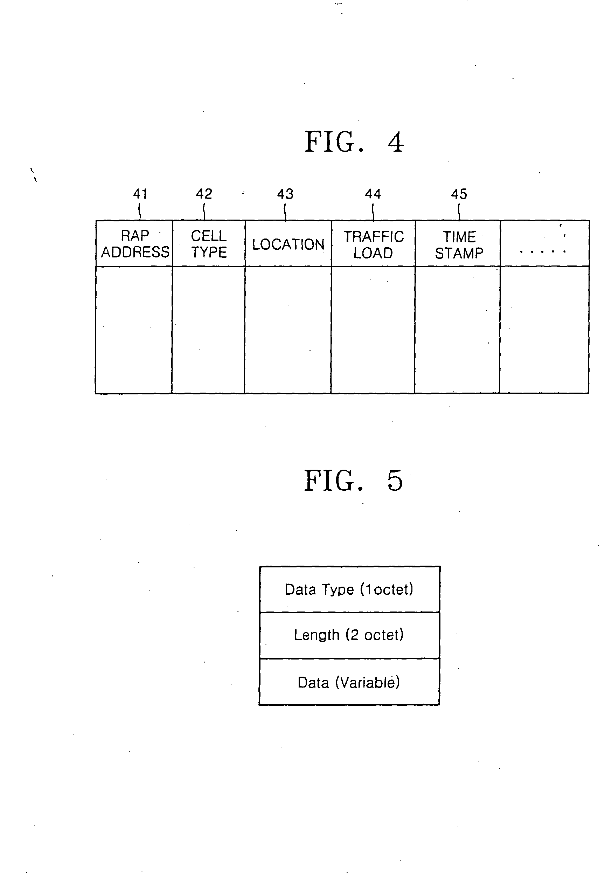

Referring to FIG. 3, in step 31, each of the RAPs 23a through 23d establishes a DB to store an information management table as shown in FIG. 4. The information management table includes RAP address information 41, RAP cell type information 42, location information 43, traffic load information 44, time stamp information 45, and other types of information. The information management table may further include PHY parameter information, service type information, security feature information, and so on. The RAP cell type information 42 is to indicate whether the mobile communication system includes hierarchical cells or different cells with their own features. The location information 43 is to indicate location information of neighboring RAPs which can be obtained using a global positioning system or the like. The traffic load information 44 is to indicate resources assigned to cells currently managed by current RAPs and available extra resources. The time stamp information 45 is to indicate the time required for generating a message including network operation information and allows an RAP receiving the message to determine from a calculation of a transmission delay value or a time to live (TTL) value among the RAPs 23a through 23d whether the network operation information is discarded. The PHY parameter information may include information on types of modulation methods supported by the RAPs 23a through 23d. The service type information is to show types of services that the RAPs 23a through 23d offer to users. The security feature information is to indicate security-related information necessary among the RAPs 23a through 23d or between the RAPs 23a through 23d and the mobile terminals.

In step 32, a message format is defined to transmit the network operation information among the RAPs 23a through 23d. As shown in FIG. 5, information may be arranged in a type length value (TLV) format widely used by IEFT. In the TLV format, 1 octet may be used for data type, 2 octets for data length, and variable octets for actual data. When such a TLV format is used, the RAPs 23a through 23d can effectively receive and transmit only useful information with one another.

In step 33, the RAPs 23a through 23d collect various kinds of information to operate networks for their managed cells, according to a set period. The network operation information may include the RAP cell type information 42, the location information 43, the traffic load information 44, the time stamp information 45, the PHY parameter information, the service type information, the security feature information, etc.

In step 34, the RAPs 23a through 23d packet the network operation information in the message format using a general-purpose protocol stack such as an IP to generate one piece of packet data.

In step 35, the RAPs 23a through 23d transmit the packet data to neighboring RAPs located within a predetermined range. The packet data may be transmitted using a broadcast method, a multicast method, or Inter Access Point Protocol (IAPP) which is under development within IEEE 802.11f. The range of the transmission of the packet data may be set using the TTL value. In other words, when one RAP starts transmitting a message to neighboring RAPs, the TTL value is set to a hop number or an elapsed time. The neighboring RAPs then receive the message to collect information and checks whether the TTL value exceeds a threshold before transmitting the message to other RAPs. If the TTL value exceeds the threshold, the neighboring RAPs discard the message.

In step 36, each RAP analyzes the message received from another RAP and then stores information on neighboring RAPs in respective RAP addresses in the DB to update the network operation information. As a result of the message analysis, a signal delay time or a hop number are obtained. Here, the signal delay time refers to transmission delay which is expected when signaling is performed between a transmitter RAP and a receiver RAP via a wire network. The signal delay time can be calculated from the time stamp information 45 and the actual time required for receiving a message from an RAP. Also, the hop number refers to a distance from a network between the transmitter RAP and the receiver RAP to a hop. The distance can be checked by indicating a number of hops whenever the packet data is transmitted to neighboring RAPs.

Due to the above-described steps, each RAP can periodically update its information management table. Thus, a mobile communication system can rapidly and appropriately process a admission control function, a handover control function, a resource management function, an AAA function, a quality of service (QoS) function, and the like between mobile terminals and RANs without exchanging information with additional devices.

As described above, according to the present invention, nodes can exchange various kinds of control information with one another in advance to operate networks. Thus, information management tables of the nodes can be periodically updated to rapidly process an admission control function, a handover control function, a resource management function, an AAA function, a QoS function, and so forth. Also, since it is not necessary to use various types of devices needed in a centralized management way, costs for constituting a mobile communication system can be considerably reduced. In addition, the nodes can share various kinds of information in a decentralized management way to operate networks. Thus, the networks can extend and the poor performance of the mobile communication system due to a load of traffic in a specific device can be prevented. Furthermore, since the network operation information can be transmitted using a general-purpose protocol stack, the mobile communication system can operate together with other systems.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method of managing various kinds of network operation information in a mobile communication system comprising a plurality of nodes connecting wire networks and wireless networks, the method comprising:
establishing a database comprising information management tables comprising the network operation information;
defining a message format to transmit the network operation information among the nodes;
collecting the network operation information for cell areas managed by the nodes, according to a set period;
packeting the collected network operation information in the message format using a predetermined general-purpose protocol;
transmitting the packeted message to neighboring nodes; and
analyzing the transmitted message to update the network operation information in the information management tables of the nodes in the database.

2. The method of claim 1, wherein the message format is a type length value format which arranges information.

3. The method of claim 1 or 2, wherein the general-purpose protocol is an Internet protocol.

4. The method of any preceding claim, wherein in the transmission of the packeted message to the neighboring nodes, the packeted message is transmitted to the neighboring nodes using one of a broadcast method, a multicast method, and an IAPP method.

5. The method of any preceding claim, wherein in the transmission of the packeted message to the neighboring nodes, a range to transmit the packeted message is set using a time to live value.

6. The method of claim 5, wherein the time to live value comprises a hop number or an elapsed time.

7. The method of claim 1, wherein the information comprised in the information management tables comprises node address information, node cell type information, location information, and traffic load information.
